Europäisches Patentamt

European Patent Office

Office européen des brevets

(11) Publication number: **0 474 982 A2**

# EUROPEAN PATENT APPLICATION

(21) Application number: **91109874.7**

(22) Date of filing: **17.06.91**

(51) Int. Cl.5: **B29C 55/06**

(30) Priority: **20.06.90 US 540941**

(43) Date of publication of application:
**18.03.92 Bulletin 92/12**

(84) Designated Contracting States:
**AT BE CH DE DK ES FR GB GR IT LI LU NL SE**

(71) Applicant: **Montedison S.p.A.**
**31, Foro Buonaparte**
**I-20121 Milan(IT)**

(72) Inventor: **Sun, Tong**
**L-4 Draper's Meadow Apts.**
**Blacksburg, Virginia 24060(US)**
Inventor: **Baird, Donald G., Virginia**
**Polytechnic Institute**
**Dep. of Chem. Eng. 128 Randlph Hall, Turner St.**
**Blacksburg, Virginia 24061(US)**

(74) Representative: **Gervasi, Gemma, Dr. et al**
**NOTARBARTOLO & GERVASI Srl 33, Viale Bianca Maria**
**I-20122 Milano(IT)**

(54) **Polyblends comprising highly oriented liquid crystalline polymer fibrils.**

(57) A two-stage process and drawing apparatus for treating a composite melt of LCP (liquid crystalline polymer) and a separate polymer matrix to produce a composite polymeric material having drops of LCP in the melt having an average diameter of at least 5 microns, the drawn final product showing LCF fibrils with molecular orientation.

## BACKGROUND OF THE INVENTION

Field of the Invention

The present invention relates to a process for preparing polyblends comprising engineering thermoplastics and liquid crystalline polymers (LCP) and products thereof.

Description of the Related Prior Art

It is well known that by blending LCP's with engineering thermoplastics the formation of self-reinforced thermoplastic composites can be promoted. It is also known that under certain processing condition LCP's are known to form fibers which serve as a reinforcing phase.

Blizard and Baird, Polymer Engr. Sci. 27, 9, 653 (1987), studied blends of PET/60 PHB (a liquid crystalline copolyester of 60 mol % p-hydroxybenzoic acid and 40- mol % polyethylene terephthalate) with nylon 6,6 or polycarbonate (PC). Their work indicated that LCP microfibrils can be generated at certain compositions particularly under the influence of extensional flow.

Isayev and Modic, Polym. Comp., 8, 3, 158 (1987) and Swamenathan and Isayev, Polym. Mat. Sci. Engr., 57, 330 (1987) examined blends of liquid crystalline aromatic copolyesters with polycarbonate or polyetherimide. They also identified the composition and processing conditions during injection molding that resulted in the formation of LCP microfibrils and related that morphology to an improvement in mechanical properties.

Weiss et al., Polym. Engr. Sci. 27, 684 (1987), extruded fibers from blends of a low molecular weight LCP with polystyrene at concentrations below 10 weight percent of the LCP and reported some enhancement (ca. 50%) of the tensile properties of the fibers due to the reinforcing effect of the LCP fibrils.

However, no real significant improvement in properties has been found for these in-situ composites. The presence of microfibrils in the polyblend does not guarantee that enhanced physical properties will be obtained for the polyblend, because there may be very little molecular orientation in the microfibrils.

## SUMMARY OF THE INVENTION

A process is now described whereby a composite melt, constituted of a polyblend, comprising an LCP phase and a polymer matrix, is drawn in a two-stage drawing process, the components of the composite being partially soluble in the melt and selected so that LCP drops having a mean diameter of at least 5 microns are formed and the LCP viscosity is the same as, or not greater than, the viscosity of the polymer matrix over the temperature range at which the process is carried out.

The LCP fibrils are molecularly highly oriented and satisfactory adhesion between the fibrils and the polymer matrix is achieved. Such high orientation brings about an improvement in the mechanical properties of the manufactured products, and particularly in the case of strings or sheets produced with the polyblends of the invention.

The tensile modulus of the polyblend of the invention can be improved by as much as a factor of 6 or even more with respect to the neat matrix, depending on the draw parameters and the polyblend composition.

## DETAILED DESCRIPTION OF THE INVENTION

One object of the present invention is to provide a process for obtaining LCP fibrils oriented in a polymer matrix by using a two-stage drawing process.

Another object of the present invention is to provide polyblends containing highly oriented fibrils of LCP in a polymer matrix.

A further object of the invention is to provide a device for processing the polyblends.

The term "polyblend", herein denotes a polymer mixture constituted by the combination of a polymer matrix comprising an engineering thermoplastic phase and an LCP phase.

By the term "engineering thermoplastics", as used in the present description, polymers such as polyetherimide, and related copolymers, and polyetheretherketone are meant.

Liquid crystalline polymers (LCP) are polymers known per se and exist in, or can form, a liquid-crystal state, defined as an LCP phase.

Suitable LCPs are for instance GRANLAR which is an aromatic polyester consisting of 25% hydroquinone, 25% phenylethylhydroquinone, and 50% terephthalic acid moieties and VECTRA which is an

2

aromatic polyester consisting of 73% hydroxybenzoic acid and 27% 2-hydroxy-6-naphthoic acid moieties.

In the present description, LCP means a single polymer or a mixture of polymers forming a liquid-crystal state or phase.

According to this invention, LCP is blended with an engineering thermoplastic and melted in an extruder to form drops of the LCP phase having an average diameter of at least 5 microns. section, preferably circular or rectangular (a film or sheet die), and the extrudate is then drawn in a two-stage draw process to generate molecular orientation within both phases but primarily in the LCP phase, and ultimately LCP fibrils within the engineering thermoplastic phase.

The key factors controlling the formation of oriented fibrils of LCP are these: the viscosity ratio of the LCP and of the engineering thermoplastic matrix during the extrusion; the parameters of the drawing process; and the extent of the miscibility of the polymer components of the polyblend. Here "miscibility" refers to the ability of two or more polymers to form a single homogenous phase. (See Baird and Ramanathan, a review article in Contemporary Topics in Polymer Science (1990) at pages 73 to 93). The significance of the extent or degree of miscibility resides in the degree or extent of the breakup of the droplets of LCP created in the matrix by reason of the stresses during extrusion and drawing.

The process according to the present invention comprises the following steps:

-- defining a processing temperature range for the polyblend;

-- selecting the components of the polyblend so that (i) the viscosity of the LCP phase is equal to or lower than the viscosity of the engineering thermoplastic matrix in the range from the extrusion temperature to the temperature of final drawing, and (ii) the partial miscibility of the LCP phase in the matrix is so that LCP drops having a dimension of at least 5 microns are

- mixing the components of the polyblend in an extruder kept at a temperature higher than the melting temperature of the polyblend;

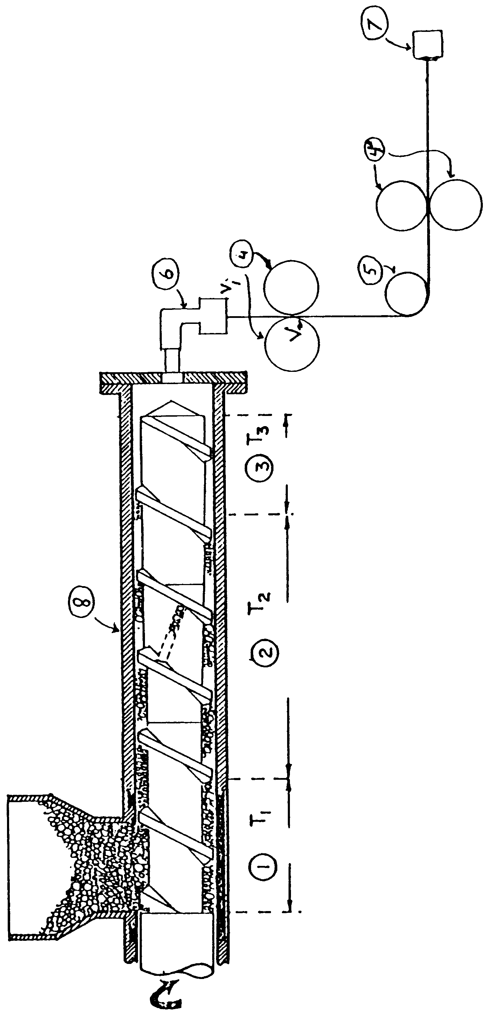

- extruding while applying extension rates of at least 1.0 $sec^{-1}$ in the first drawing zone ($DR_1$ wherein in the accompanying Figure 1 this denotes the ratio of the velocities of the polymer product from the draw rolls 4 to the extrudate from the tip of the extruder) in order to produce an elongational stress promoting a molecular orientation of the LCP fibrils; and

- drawing further by applying draw rations (where $DR_2$ is the ratio of the velocity of the polymer material after passing through the second raw rolls 4' to its velocity after passing through the first draw rolls 4) higher than 1.0 in the second drawing zone, the draw ratio (DR) being determined by measuring the cross-sectional area of the extrudates at the die exit and that of the drawn products, in order to maintain the molecular orientation during the cooling of the drawn products.

- In the present text extension rate, E1, is defined according to the following equation:

$$E1 = \frac{V_2 - V_1}{D}$$

where $V_1$ represents linear flow velocity of the melt at the exit of the die, $V_2$ represents linear speed of the takeup roller, and D represents the vertical distance between the die exit and the contact point of the takeup roller pair (see the accompanying figure).

Preferred DR's in the second drawing zone are in the range 1.0 - 8.0; particularly preferred are those in the range 1.0 - 2.0. The extruded shape can be whatever may be desired, strings and sheets being preferred. In order to define the processing temperature range, it is necessary to find our the "processing windows" for the polymer matrix and the one for the LCP phase in the polyblend, that is the temperature range in which each of the two polymers is processable. Consequently it is necessary to determine the highest temperature at which the polymer matrix and the LCP phase still remain thermally stable. This temperature can be evaluated from a rheological point of view. The highest temperature at which the rheological behavior remains stable in a certain period of time is defined as its upper rheologically stable temperature, designated as Trs. If thermal stability is evaluated by using thermogravimetric analysis (TGA), the initial weight loss temperature can be used to define the decomposition temperature, designated as Td. Furthermore for the matrix and the LCP phase in the polyblend the solidification temperature, Tx, is determined, this being the lowest limit of the processing window. For the present invention Tx must be ≦ Tm, where Tm is the melting temperature, or, in the case of amorphous polymers, Tx ≦ Tf where Tf is the flow temperature.

For some polymers, e.g., amorphous polymers, Tx is fixed and unequivocally determined as the temperature where G' = G'' (G' being the in-phase component and G'' the out-of-phase component of the torsional modulus $G^*$) and tan $\delta$ = $1^2$. Tan $\delta$ is defined as the ratio of $G''$ to $G'$ or the ratio of the energy loss per cycle of deformation to the energy stored per cycle of deformation. This quantity is commonly used to identify thermodynamic transitions in polymeric materials such as glass transition temperatures. It is more sensitive to these transitions than differential scanning calorimetric measurements. Very briefly, when an oscillatory deformation is applied to a material the molecules try to deform and relax in phase with the deformation. However, when reaching a temperature such as the glass transition temperature, the molecules become more easily deformable. During the deformation process the molecules dissipate energly and hence $G''$ increases while $G'$ decreases. Hence the ratio $G''/G'$ = tan $\delta$ changes. $G'$ is the energy-stored modulus of a viscoelastic melt. $G''$ is the energy-lost modulus of the melt. When the melt "is viscous-dominant" $G''>G'$. The crossover point is considered as the onset of solidification. See Bird et al, Dynamics of Polymeric Liquids, Second Edition, 1987, Vol. 1, pages 113-116.

In the case of LCP, Tx is not fixed and depends on the thermal history of the polymer: this is due to the supercooling effect shown by such polymers.

It is defined as the degree of supercooling or difference between the normal melting (or flow) temperature Tm (or Tf) and the solidification temperature of the melt during cooling (Tx).

As a consequence, the Tx value can be adjusted by suitably thermally treating the LCP, for example by varying the initial temperature of the melt.

Owing to the supercooling effect, not only Tx changes, but also the viscosity changes, depending on the thermal history of the polymer. Having the experimental data of Trs and Tx, the processing window of each neat polymer can be readily worked out, the width of each processing window being defined by the difference between Trs and Tx ($\Delta$Tp).

In view of the above, to process the polyblend the overlapped temperature range of $\Delta$Tp of the neat polymer component defines the width of the processing window for the polyblend. It is also important to note that the Trs of the LCP should be higher than the Tm (Tf) of the matrix: this is of course a necessary condition for making sheets or strings from such a polyblend.

It has also been found that another specific condition should be taken into account in the overlapped temperature range: the viscosity of the LCP must be lower than or equal to that of the polymer matrix from the extrusion temperature down to the temperature at the end of the drawing.

The third key factor that must be taken into consideration for achieving suitable generation of fibrils in the polyblend is the mutual miscibility of a given neat polymer/LCP polymer pair.

Total immiscibility of a given polymer/LCP pair is advantageous as regards the phase separation, and thus, to the generation of fibrils. On the other hand, total miscibility may be advantageous with respect to the adhesiveness between the reinforcing phase (the LCP) and the matrix phase.

It has been found, in accordance with the present invention, that satisfactory separation of the phases and sufficient adhesiveness between the separated phases is achieved if the two phases are partially miscible, so that in the melt there are formed LCP drops having an average diameter of at least 5 microns. To verify the mean diameter of the LCP drops in the polyblend melts, the blend melts of (say) the Ultem and LCP are collected from the exit of the extruder. The solidified extrudates are fractured after immersing them in liquid nitrogen. The mean diameter of the LCP phase determined by SEM is used as a measurement for the mean diameter of LCP drops in the blend-melts. Such condition defines the minimum amount of LCP permissible in the matrix. The more miscible the two materials are the more LCP is required to generate the fibrils.

However, the LCP amount, over its immiscibility level in the matrix, should be not too high, owing to the fact that it negatively affects the drawability. Preferred amounts of LCP are in the range 20 - 30% by weight, extremes included.

Furthermore, the drawability, as characterized by the maximum draw ratio DR, has an effect on the mechanical properties, particularly $G'$, of the polyblend; that is, the torsional modulus $G'$ increases with increasing DR. This trend is general no matter what the compositions are and in which zone the polyblends are drawn.

Consequently the influence of the amount of LCP on modulus is twofold. On the one hand, high content of LCP improves the reinforcement; on the other hand, it decreases the drawability, thus decreasing the maximum modulus which the drawn blend can reach.

In view of the above, it is not helpful to use concepts known per se in the prior art in an attempt to obtain highly oriented LCP fibrils in the polymer matrix. Only the crucial combination of conditions in accordance with the present invention can insure good results.

It should be stated that the length of the fibrils is variable. In some cases they are only a few microns, in other cases they appear to be continuous (i.e. they extend the length of the sample). There is no way to specify an average length at the concentration of LCP used here (say 20 to 30 wt. %).

The polyblend should be extruded from a die (i.e. circular wide) for generating sheets), and drawn by applying extension rates in excess of 1.0 $sec^{-1}$ in the first draw zone in order to generate molecular orientation within the LCP. The degree of orientation is directly related to the magnitude of the extension rates. In the second draw zone, a draw ratio ($DR_2$) greater than 1.0 should be used in order to maintain the molecular orientation during the cooling/solidification process and create the LCP fibrils.

A bank of heaters can be inserted in the second draw zone to keep the matrix in the rubbery state.

It has been noted that the kind of die employed plays an important role in the fibril generation. It is easier to form LCP fibrils in a circular die than in a 4-in. die, owing to geometric factors.

A device for performing the process of the present invention comprises an extruder, for blending the LCP phase and the polymer matrix, connected with a die (circular or 4-in. die depending on the desired shape of the extrudate), followed by a two-stage drawing step.

In order still better to understand this invention, the following non-limiting illustrative examples are given.

In the examples all percentages are given by weight, unless otherwise specified.

## DESCRIPTION OF THE DEVICE

The device used to generate films or strings according to the present invention is shown in the accompanying figure, showing a laboratory single screw extruder (Killion KL 100) (8), connected to a die (6). Highly polished chrome-plated rolls (4) and (4') a take-up device (7) are provided. When sheets are desired, a 102 mm wide film die (die gap 0.25-0.5 mm) is employed.

The extruder was subdivided into three zones: conveying zone (1), melting, pumping and mixing zone (2), and pumping and mixing zone (3) operating at different temperatures, respectively, $T_1$, $T_2$ and $T_3$.

The temperature of each one third of the extruder is controlled by heating the surface of the barrel (8) separately.

$T_1$ is the temperature of the first one third of the barrel, $T_2$ that of the second third, and $T_3$ that of the third part.

Suitable temperature settings are chosen according to the die used, owing to the fact that a sheet die requires a higher temperature setting than a circular die.

The polyblends are prepared by tumbling together in predetermined weight ratios the dried pellets of a given matrix polymer and of a given LCP in a steel container before blending them in the extruder.

### Example I

ULTEM/GRANLAR POLYBLEND

Blend of polyetherimide with GRANLAR.

The matrix polymer was polyetherimide (Ultem 1000) sold by the General Electric Company. Ultem 1000 is an amorphous polymer with a Tg of 217°C. The reinforcing phase was GRANLAR, which is a liquid crystalline aromatic polyester consisting of 25% phenylhydroquinone, 25% phenylethylhydroquinone, and 50% terephthalic acid moieties, which was sold by GRANMONT, Inc.

Two blends were prepared: 70/30 end 80/20 ULTEM/GRANLAR. Two forms of samples are produced from the extrusion: one was hand-drawn fibers extruded through a circular die and another was sheets made by using a 4-in. sheet die.

In order to define the processing window for the polyblend, the following tests were performed:

The viscosity of Ultem remains almost unchanged as the melt is heated at 390°C for 30 seconds. Consequently Trs = 390°C for Ultem. The viscosity of GRANLAR starts to increase with time at 365°C, and therefore this temperature can be considered as Trs for Granlar.

It was found that on cooling, the Ultem melt and the Granlar melt show distinctly different rheological behavior. For Ultem the temperature at which G' = G" (i.e., tan $\delta$ = 1) is almost independent of the initial temperature of the melt.

Because Ultem is an amorphous polymer there is no other transition besides the glass transition. Thus, on cooling its melt there is no supercooling effect. In other words, for Ultem, it is impossible to adjust the solidification temperature, Tx (i.e., the temperature at which G' = G"), by varying the initial temperature of Ultem melt. In this case Tx = 220°C.

The case of Granlar is entirely different. Granlar is a liquid crystalline polymer having a melting point of 337°C. In addition to a melting temperature, Granlar shows a glass transition temperature. When Granlar melt is cooled from a temperature higher than its melting point, generally it does not solidify at the melting

EP 0 474 982 A2

point but at a temperature below the melting point. Under this condition, instead of Tm, Tx can be used as a criterion for evaluating the onset of solidification. Due to the supercooling effect exhibited by such a melt, both the viscosity at a given temperature and the Tx are affected by the initial temperature of the melt. In other words, the value of Tx may be adjusted by varying the initial temperature of the melt. When the initial temperature of the melt is 365°C, the melt solidifies at a temperature around 310°C. Thus, if 365°C is considered as an upper temperature limit, then the corresponding Tx (310°C) may be considered as the lower temperature limit for processing Granlar. Having the experimental data for Trs and Tx, the processing window of each neat polymer can be worked out. As seen from Table 1, to process the Ultem/Granlar system the overlapped temperature range is 310°C - 365°C.

## TABLE 1

|  | Tg | Tx | Tm(Tf) | Trs | Td |
|---|---|---|---|---|---|
|  | (OC) | (OC) | (OC) | (OC) | (OC) |
|  | (DSC) | (RMS) | (DSC, RMS) | (RMS) | (TGA) |
| ULTEM | 217 | 280 | 350 | >390 | 480 |
| GRANLAR | (155) | 310 | 337 | 365 | 390 |

Notes:

Tg    =    Glass transition temperature, °C

Tx    =    Solidification temperature, °C

Tm    =    Melting Temperature, °C

Tf    =    Flow temperature, °C

Trs    =    Upper rheologically stable temperature, °C

Td    =    Decomposition temperature, °C

Moreover, in the overlapped temperature range (310° - 365°C), $\eta^*$ of Granlar is smaller than $\eta^*$ of Ultem, where $\eta^*$ is the complex viscosity.

As the width of the processing window of Ultem/Granlar polyblend is known, the temperature regime of sheet and string extrusion can be readily worked out. The temperature regime and extrusion conditions are shown in Table 2, $DR_1$ being chosen in the range 8.4 - 18.6 and $DR_2$ in the range 1.5 - 1.9.

6

## TABLE 2

### TEMPERATURE REGIMES FOR PROCESSING VARIOUS

### ULTEM/GRANLAR POLYBLENDS

| Sample | Circular Die Diameter | Slit Width | Die Cap | T1 | T2 | T3 | Tm | Tn | Td | Extruder Speed |
|--------|------------------------|------------|---------|----|----|----|----|----|----|----------------|
| | (mm) | (In) | (In) | (C) | (C) | (C) | (C) | (C) | (C) | (rpm) |
| STRINGS: | | | | | | | | | | |
| U/G 80/20 | 2 | -- | -- | 350 | 370 | 370 | -- | -- | 370 | 40 |
| U/G 70/30 | 2 | -- | -- | 350 | 370 | 370 | -- | -- | 370 | 40 |
| SHEETS: | | | | | | | | | | |
| U/G 80/20 | -- | 4 | 0.01 | 350 | 360 | 360 | 360 | 360 | 360 | 40 |
| U/G 70/30 | -- | 4 | 0.01 | 350 | 360 | 360 | 360 | 360 | 360 | 40 |

Notes:

| U | Ultem |
|---|-------|
| G | Granlar |
| T1 | Temperature of zone 1 |
| T2 | Temperature of zone 2 |
| T3 | Temperature of zone 3 |
| Tm | Temperature of the melt |
| Tn | Temperature of the neck (between the screw extruder and the die) |
| Td | Temperature of the die |

From SEM micrographs of Ultem/Granlar 80/20 and 70/30 polyblend strings, long and thin fibers can be observed. X-ray diffraction patterns show that the Granlar crystalline units are highly oriented in the polyblend strings.

The neat Ultem sheet has a dynamic torsional modulus, G', of 7 GPa over a temperature range from 25°C to 210°C.

The G' of microfibril reinforced U/G 70/30 blend sheet has a value of 21 GPa in the same temperature range, i.e., three times higher than that of neat Ultem sheet.

**Example II**

PEEK/GRANLAR POLYBLEND

Blend of PEEK with GRANLAR.

PEEK is a matrix polymer that is a semicrystalline engineering thermoplastic consisting of polyetheretherketone.

The polyblend has been extruded as a sheet and drawn with $DR_1$ = 2 and $DR_2$ = 8.

The value of G' of neat PEEK sheet is around 10 GPa. After reinforcing with Granlar microfibrils the G' of PEEK/Granlar 70/30 crystalline nature of the PEEK matrix, the level of G' of PEEK/Granlar sheet remains almost unchanged up to 300°C.

**Example III**

ULTEM/VECTRA POLYBLEND

Blend of polyetherimide with VECTRA.

The reinforcing phase was a liquid crystalline aromatic copolyester consisting of 73% hydroxybenzoic acid and 27% 2-hydroxy-6-naphthoic acid moieties (Vectra A-900), sold by Celanese Corporation. The melting point of Vectra A-900 is 284°C.

The rheological properties of the blends and their components were determined on a Rheometrics Mechanical Spectrometer (RMS 800).

All experiments were done by using a parallel plate attachment with a radius of 12.5 mm and a gap setting from 1.2 to 1.8 mm.

The processing window for ULTEM is defined in Example I. In the case of Vectra[4], the complex viscosity, $\eta^*$, remains almost unchanged with time when the temperature is below 350°C. Therefore, 350°C can be taken as its upper rheologically stable temperature. The lower temperature limit depends on the degree of supercooling which takes place.

Vectra is a copolyester of p-hydroxybenzoic acid and 2-hydroxy-6-naphthoic acid.

As the melt is cooled from 300°C, Tx is found to be 264°C which is 20°C lower than its melting point, Tm. When the preheating temperature is raised to 310°C, the viscosity drops about a tenth and Tx is reduced to 255°C. The viscosity and Tx then drop to a lesser extent as the preheating temperature goes from 310°C to 360°C. Therefore, due to the supercooling effect of this liquid crystalline polymer melt, both the viscosity at a given temperature and Tx are dependent on the thermal history. This fact can be utilized for adjusting the width of the processing window. Based on the experimental data for Tr and Tx, the width of the processing window for each neat polymer has been determined. For Ultem and Vectra the temperature ranges are 285°C-390°C and 255°C-350°C, respectively. The overlapped temperature range of the processing window of the Ultem/Vectra polymer pair (i.e. from 285°C to 350°C) serves as the width of the processing window for this system. For pure Ultem, Tx is around 285°C. This temperature is lowered to 280°C as 10% of Vectra is added.

To understand the effect of blend composition on the rheological behavior of the Ultem/Vectra system the complex viscosity change during cooling was monitored: it is to be noted that the viscosity of the Ultem/Vectra 90/10 blend is still dominated by that of Ultem.

The Ultem/Vectra 70/30 blend shows a similar behavior. For the Ultem/Vectra 50/50 blend, the viscosity is somewhat lower than for other compositions. Tx also shifts to 275°C. However, the viscosity of the 50/50 blend is still at least a tenth higher than that of the pure Vectra. Therefore, based on the above results it is preferred to use the Tx of the blend at a given composition (and not that of pure Ultem) as the lower temperature limit for processing.

Polyblends of different compositions were drawn. The drawing conditions were as follows: Linear flow speed of the melt at the die exit = 1 to 1.5 m/min. Draw ratio = 3 to 57. Temperature of drawing rollers is in the range of 40° to 60°C. By blending Ultem with Vectra the torsional modulus of the Ultem sheets are greatly enhanced. G' of the neat Ultem sheet was around 1.5 GPa, but G' of the Ultem/Vectra blend sheets (with a Vectra content ranging from 10% to 30%) is in the range of 50 to 70 GPa, i.e. about 30 to 47 times higher than that of neat Ultem sheet.

Data are listed below in Table 3 for the first drawing zone. The highest values of modulus were achieved with only 10% Vectra because a higher draw ratio could be achieved. A further increasing in the G' values is obtained in the second drawing zone.

TABLE 3

MAXIMUM DRAW RATIO IN THE FIRST DRAWING ZONE FOR

VARIOUS COMPOSITIONS OF ULTEM/VECTRA BLEND SHEETS AND

THEIR TORSIONAL MODULUS

| Weight Composition of Vectra in Blend | Maximum Draw Ratio | Dynamic Torsional Modulus at 100°C |
|---|---|---|
| % | | GPa |
| / | | 1.5 |
| 10 | 57 | 70 |
| 20 | 31 | 32 |
| 30 | 19 | 40 |
| 50 | 9.5 | 4 |

**Claims**

1. A process whereby a composite melt comprising an LCP phase and a crystalline polymer matrix is extruded and then drawn in two stages; said process comprising the following steps:

    a) preparing a mixture of LCP and a polymer matrix, the viscosity of the LCP being lower than, or the same as, the viscosity of the polymer matrix in the range from the extrusion temperature to the final drawing temperature and the two polymers being partially miscible in the melt, so that drops of LCP are formed in the melt having an average diameter of at least 5 microns;

    b) heating the mixture in an extruder kept at a temperature greater than the melting temperature and lower than the decomposition temperature and the upper rheologically stable temperature of the blend and extruding the melt composite,

    c) drawing the extrudate in a first drawing zone in order to produce an elongational stress promoting molecular orientation of the composite material including the LCP; and

    d) drawing further in a second drawing zone in order to maintain the molecular orientation during the cooling of the drawn product, thereby obtaining a composite material wherein the LCP is present in essentially fibril form.

2. A process whereby a composite melt comprising an LCP phase and an amorphous polymer matrix is extruded and then drawn in two stages, said process comprising the following steps:

    a) preparing a mixture of LCP and a polymer matrix, the viscosity of the LCP being lower than, or the same as, the viscosity of the polymer matrix in the range from the extrusion temperature to the final drawing temperature and the two polymers being partially miscible in the melt, so that drops of LCP are formed in the melt having an average diameter of at least 5 microns;

    b) heating the mixture in an extruder kept at a temperature greater than the melting temperature of the LCP and of the flow temperature of the matrix polymer and lower than the decomposition temperature and the upper rheologically stable temperature of the blend and extruding the melt composite;

    c) drawing the extrudate in a first drawing zone in order to produce an elongational stress promoting molecular orientation of the composite material including the LCP fibrils; and

    d) drawing further in a second drawing zone in order to maintain the molecular orientations during the cooling of the drawn product, thereby obtaining a composite material wherein the LCP is present in essentially fibril form.

3. A process according to Claim 1 or 2 wherein in the first drawing zone extension rates of at least 1.0 $sec^{-1}$ are employed.

4. A process according to Claim 1 or 2 wherein in the second drawing zone draw ratios higher than 1.0 are employed, the draw ratio DR being determined by measuring the cross-sectional area of the extrudate at the beginning and at the end of the drawing process.

5. A process according to Claim 4 wherein extension rates in the range 1.0 - 8.0 are employed.

6. A process according to Claim 4 wherein extension rates in the range 1.0 - 2.0 are employed.

7. A process according to Claim 1 or 2 wherein instead of Trs, Td is used, Td being the highest temperature at which a weight loss of the polymer occurs.

8. A process according to Claim 1 or 2 wherein the polyblend is extruded through a circular die for generating strings.

9. A process according to Claim 1 or 2 wherein the polyblend is extruded through a 4-in. die for generating sheets.

10. A process according to Claim 1 or 2 wherein a bank of heaters is inserted in the second draw zone to keep the matrix in the rubbery state.

11. A polyblend comprising an LCP phase and a polymer matrix in which LCP fibrils are molecularly oriented therein, said polyblend having been obtained by the process of Claim 1 or 2.